# EUROPEAN PATENT APPLICATION

(11) **EP 4 782 330 A1**
(43) Date of publication of application: **29.07.2026**
(21) Application number: 25305111.4
(22) Date of filing: 28.01.2025
(51) Int. Cl.: B64C 5/10, B64C 9/30, B64C 9/32, B64C 13/36, B64C 13/38

(54) **AIRCRAFT CONTROL SURFACE SYSTEMS**

(71) Applicant: Goodrich Actuation Systems SAS, 27950 Saint-Marcel (FR)
(72) Inventor: MICHEL, Adrien, 27950 Saint-Marcel (FR); TENNEREL, Benoit, 27950 Saint-Marcel (FR)
(74) Representative: Casalonga

(57) **Abstract**

An aircraft control surface system 101 comprises a control surface 102 and an actuator device 200 for controlling movement of the control surface between a retracted configuration and a deployed configuration. The actuator device comprises an actuator arm 202 coupled to the control surface, a barrel 204, a piston 206 and a pumping apparatus 212. The actuator can perform a deployment operation in which a deploying force causes the control surface to move from the retracted configuration to the deployed configuration and the piston to move so as to cause an increase in the fluid pressure difference between forward 208 and rear 210 chambers of the barrel. The actuator can also perform a retraction operation in which the pumping apparatus causes fluid to flow into the forward chamber of the barrel to further increase the fluid pressure difference and drive the piston to move so that the control surface moves from the deployed configuration to the retracted configuration.

## Description

### Technical Field

The present disclosure relates to an aircraft control surface systems.

### Background

Aircraft can often encounter sudden wind gusts during flight. These gusts can produce large structural loads on the wings, potentially hindering the comfort and efficiency of flight. Gust mitigation strategies include actuating control surfaces such as spoilers on the wings to counteract the gusts (e.g. by temporarily reducing the lift generated by the wings). Because gusts occur suddenly, it is important that the relevant control surfaces can be actuated quickly. However, it is also desirable to minimise the size, mass and energy use of actuators on aircraft.

### Summary

According to a first aspect of the present disclosure there is provided an aircraft control surface system comprising:
a control surface having a retracted configuration and a deployed configuration and arranged to be provided on an aircraft so as to be subject to a deploying force urging it towards the deployed configuration when the aircraft is in motion; and
an actuator device for controlling movement of the control surface between the retracted configuration and the deployed configuration, the actuator device comprising:
   an actuator arm coupled to the control surface;
   a barrel comprising a fluid port;
   a piston coupled to the actuator arm, wherein the piston divides the barrel into a forward chamber and a rear chamber and the piston is arranged to move within the barrel between a first position corresponding to the retracted configuration of the control surface and a second position corresponding to the deployed configuration of the control surface; and
   a pumping apparatus arranged to cause fluid to flow into the forward chamber of the barrel via the fluid port to increase a fluid pressure difference between the forward chamber and the rear chamber;
wherein the actuator device is operable to perform:
a deployment operation in which the deploying force causes the control surface to move from the retracted configuration to the deployed configuration and the piston to move from the first position to the second position so as to cause an increase in the fluid pressure difference between the forward and rear chambers of the barrel; and
a retraction operation in which the pumping apparatus causes fluid to flow into the forward chamber of the barrel to further increase the fluid pressure difference between the forward chamber and the rear chamber and drive the piston from the second position to the first position, so that the control surface moves from the deployed configuration to the retracted configuration.

According to a second aspect of the present disclosure there is provided a method of actuating a control surface having a retracted configuration and a deployed configuration and provided on an aircraft so as to be subject to a deploying force urging it towards the deployed configuration when the aircraft is in motion, the method comprising:
deploying the control surface by allowing the deploying force to cause the control surface to move from the retracted configuration to the deployed configuration, wherein this movement causes a piston of an actuator device coupled to the control surface via an actuator arm to move from a first position within a barrel to a second position within a barrel so as to cause an increase in a fluid pressure difference between a forward chamber of the barrel and a rear chamber of the barrel; and
retracting the control surface by a pumping apparatus of the actuator device causing fluid to flow into the forward chamber of the barrel via a fluid port to further increase the fluid pressure difference between the forward chamber and the rear chamber and drive the piston from the second position to the first position, so that the control surface moves from the deployed configuration to the retracted configuration.

Thus, it will be recognised by those skilled in the art that causing the fluid pressure difference between the forward and rear chambers of the barrel to increase during the deployment operation (i.e. when the control surface is moving with the deploying force) stores energy that can then be used during a subsequent retraction operation. In other words, the increase in the fluid pressure difference during deployment means that the further pressure difference increase needed to retract the control surface with a desired speed (i.e. when the control surface is moving against the deploying force) is reduced.

Moreover, the deployment motion causing the fluid pressure difference between the forward and rear chambers of the barrel to increase generates an increasing damping force opposing the deployment, mitigating sudden shocks to the control surface as it is deployed. Similarly, during the retraction operation, as the piston moves from the second position to the first position, the forward chamber will increase in volume and the fluid pressure difference will decrease, damping the retraction motion.

In a set of examples, the pumping apparatus comprises a pump. The pump may be arranged to pump fluid into the barrel via the fluid port. In a set of examples, the pumping apparatus comprises an accumulation tank in fluid communication with the fluid port, wherein the pump is arranged to pump fluid into the accumulation tank. Providing an accumulation tank may allow fluid to be delivered to the barrel more quickly, i.e. enabling the use of a smaller pump without sacrificing peak flow capacity. The accumulation tank may have a volume of at least 1.2 times a stroke volume of the piston, e.g. at least 1.5 times, at least 1.8 times or at least 2 times. The accumulation tank may have a volume of at least 300 cm³, at least 400 cm³, at least 500 cm³, at least 600 cm³, or at least 700 cm³. The accumulation tank may be arranged to hold a fluid pressure of at least 70 bar, at least 90 bar or at least 110 bar.

The barrel may comprise a cylinder. The cylinder may have an inner diameter of between 30 mm and 120 mm (e.g. approximately 60 mm). The actuator device may have an overall outer diameter of between 160 mm or less, 140 mm or less, 120 mm or less, 100 mm or less or 80 mm or less. The pumping apparatus may be positioned in-line with the barrel and the piston, to reduce an overall outer diameter of the actuator device.

In a set of examples, the barrel comprises a second fluid port, and the pumping apparatus is operable to cause fluid to flow into the rear chamber via the second fluid port. In some examples, the deployment operation comprises the pumping apparatus causing fluid to flow into the rear chamber (e.g. for only part of the deployment operation). This may be useful for ensuring that the control surface reaches the deployed configuration, e.g. if the deploying force is insufficient to pull the control surface all the way to the deployed configuration.

In a set of examples, the barrel comprises a third fluid port operable to vent fluid from the rear chamber of the barrel. For instance, in examples where the deployment operation comprises the pumping apparatus causes fluid to flow into the rear chamber, the actuation device may be arranged to vent fluid from the rear chamber via the third fluid port at the end of the deployment operation (e.g. to maximise a fluid pressure difference at the start of the retraction operation). In a set of examples, the third fluid port may be operable to vent fluid from the rear chamber to an inlet of a pump of the pumping apparatus.

The actuator device may comprise one or more valves arranged to control a flow of fluid through the one or more fluid ports of the barrel. The actuator device may be controlled to perform the deployment and/or retraction operations by opening and/or closing said one or more valves. For instance, the actuator device may be caused to perform the retraction operation by opening a valve to cause fluid to flow into the forward chamber of the barrel.

In a set of examples, the actuator device comprises a valve operable to connect the forward and rear chambers of the barrel. Opening said valve may cause the fluid pressures within the chambers to equalise, i.e. to reduce the fluid pressure difference to zero. The valve may be located between the (first) fluid port and the second or third fluid point. In some examples, said valve may be opened during a first part of the deployment operation (e.g. to reduce initial resistance to the deploying force to speed up deployment). For instance, the valve may be opened until the piston has moved at least 20% of the distance from the first position to the second position (e.g. at least 30%, at least 40%, or at least 50%).

In a set of examples, the actuator device performs the deployment operation in response to a gust being detected. Correspondingly, the actuator device may perform the retraction operation in response to a gust ending. As explained above, deploying an appropriate control surface during a gust may mitigate sudden loads on the aircraft from the gust (e.g. a sudden increase in lift). The aircraft control surface system may comprise a gust detector arranged to detect gusts over the control surface. The aircraft control surface system may comprise a controller arranged to trigger the actuator device based on an output from the gust detector (e.g. to trigger the actuator device to perform the deployment operation in response to a gust being detected and/or trigger the actuator device to perform the retraction operation in response to a gust ending).

In a set of examples, the actuator device comprises a resilient member arranged to bias the piston towards the first position. The resilient member may comprise a spring. A resilient member may provide an additional source of damping and energy storage during the deployment operation.

The actuator device may have only two steady state configurations, corresponding to the control surface being in the retracted and deployed configurations. In other words, the actuator device may be a binary actuator operable to move the control surface only between the retracted and deployed configurations, with no intermediate configurations. However, in a set of examples the control surface has at least one intermediate configuration between the retracted and deployed configurations (e.g. where the control surface is not fully deployed). In such examples, the actuator device may be arranged to perform an intermediate deployment operation in which the deploying force causes the control surface to move from the retracted configuration to the intermediate configuration and the piston to move from the first position to an intermediate position. The movement of the piston to the intermediate position may cause an increase in the fluid pressure difference between the forward and rear chambers of the barrel.

Additionally or alternatively, in some examples the actuator device may be arranged to perform an intermediate retraction operation in which the pumping apparatus causes fluid to flow into the forward chamber of the barrel to increase the fluid pressure difference between the forward chamber and the rear chamber and drive the piston from the second position to the intermediate position, so that the control surface moves from the deployed configuration to the intermediate configuration.

The actuator device may be operable to perform a further deployment operation in which the deploying force causes the control surface to move from the intermediate configuration to the deployed configuration and the piston to move from the intermediate position to the second position so as to cause an increase in the fluid pressure difference between the forward and rear chambers of the barrel. The intermediate and further deployment operations may together equate to performing the (total) deployment operation.

Correspondingly, the actuator device may be operable to perform a further retraction operation in which the piston is driven from the intermediate position to the first position, so that the control surface moves from the intermediate configuration to the retracted configuration.

It will be appreciated that a further deployment operation may follow an intermediate deployment operation or an intermediate retraction operation, and a further retraction operation may follow an intermediate retraction operation or an intermediate deployment operation. Being able to move the control surface to and from the intermediate configuration may be useful, e.g. for fine control over gust mitigation. In some examples, the control surface has a plurality of intermediate configurations between the retracted and deployed configurations. In such examples, the actuator device may be arranged to perform appropriate deployment and retraction operations to move the control surface between each of the intermediate configurations.

In a set of examples, the actuator device comprises a cleat arranged to hold the control surface in the retracted configuration and/or the deployed configuration. The cleat may be arranged to hold the control surface in the intermediate configuration. The cleat may comprise a locking member arranged to engage with the actuator arm to hold the control surface in position (e.g. a locking member arranged to engage with one or more detents in the actuator arm corresponding to the retracted configuration and/or the deployed configuration and/or the intermediate configuration). The cleat may be arranged to be actuated between a locked configuration in which the actuator arm is held in the retracted configuration or the deployed configuration (or an intermediate configuration) and a released configuration in which the actuator arm is free to move (e.g. due to the deploying force and/or the fluid pressure difference between the forward and rear chambers of the barrel). The cleat may be arranged to be actuated by fluid pressure provided from the pumping apparatus. The cleat may comprise a resilient member arranged to bias the piston towards the locked configuration or the released configuration.

In a set of examples, the control surface comprises a wing control surface such as an aileron, a flap or a spoiler. The control surface may be a hinged control surface, i.e. in which the deployed and retracted configurations correspond to different angles of the surface about the hinge. The deploying force may be generated by air flowing over the wing when the aircraft is in motion. In a set of examples, the deploying force is at least 5000N, at least 10000N, at least 15000N, or at least 20000N when the aircraft is travelling at flight speeds (e.g. between 50 m/s and 500 m/s, between 100 m/s and 400 m/s, or approximately 250 m/s).

It may be important for the deployment and/retraction operations to be performed relatively quickly (e.g. to respond to a sudden gust). In a set of examples, the actuator device is arranged to perform the deployment operation in less than 500 ms, less than 400 ms, less than 300 ms, less than 200 ms or less than 150 ms. Additionally or alternatively, in a set of examples, the actuator device is arranged to perform the retraction operation in less than 600 ms, less than 500 ms, less than 400 ms, or less than 300 ms.

It may be important for the actuator device to fit in a relatively small space (e.g. inside an aircraft wing). In a set of examples, the actuator device comprises an overall dimension (e.g. when the control surface and thus the actuator arm is in the retracted state) of less than 1.5 m, less than 1 m, less than 0.9 m, less than 0.8 m or less than 0.7 m.

In a set of examples, the fluid pressure difference between the forward and rear chambers at the end of the deployment operation is at least 20 bar, at least 30 bar or at least 50 bar. In a set of examples, the fluid pressure difference between the forward and rear chambers is increased during the retraction operation to at least 50 bar, at least 70 bar, at least 90 bar or at least 100 bar.

In a set of examples, the actuator device is a hydraulic actuator device. In other words, in some examples, the fluid comprises a liquid (e.g. oil). Alternatively, the actuator device comprises a pneumatic actuator device. In other words, in some examples, the fluid comprises a gas (e.g. air).

In a set of examples, the actuator device is a linear actuator device (i.e. where the actuator arm moves in a straight line when the piston moves from the first position to the second position).

The present disclosure extends to an aircraft comprising the aircraft control surface system disclosed herein. In such examples, the control surface is provided on the aircraft (e.g. on a wing of the aircraft) so as to be subject to a deploying force urging it towards the deployed configuration when the aircraft is in motion.

Features of any aspect or example described herein may, wherever appropriate, be applied to any other aspect or example described herein. Where reference is made to different examples, it should be understood that these are not necessarily distinct but may overlap. It will be appreciated that where appropriate all of the optional features described with reference to the aircraft of the first aspect may also apply to the method of the second aspect.

### Detailed Description

One or more non-limiting examples will now be described, by way of example only, and with reference to the accompanying figures in which:
Figure 1 is a schematic diagram of an aircraft according to an example of the present disclosure;
Figure 2 is a block diagram of part of an aircraft control surface system according to an example of the present disclosure;
Figures 3-5 are schematic diagrams of an actuator device according to an example of the present disclosure during a deployment operation; and
Figures 6-8 are schematic diagrams of an actuator device according to an example of the present disclosure during a retraction operation.

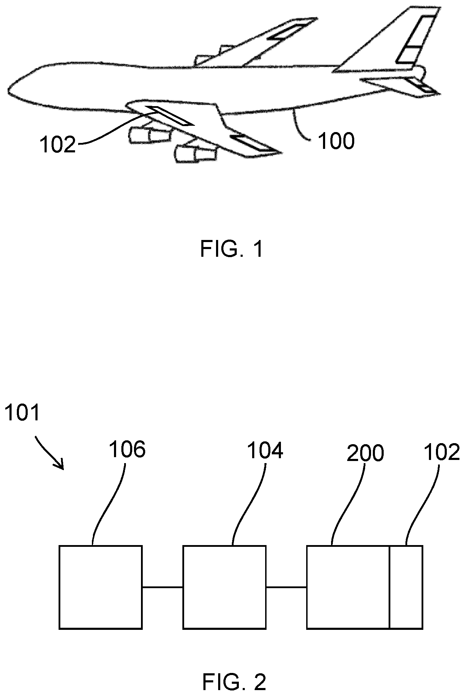

Figure 1 shows an aircraft 100 comprising a spoiler 102 located on a wing of the aircraft. The spoiler 102 can be moved between a retracted configuration, in which it is generally flush with the surface of the wing, and a deployed configuration in which it extends from the wing surface to disrupt air flowing over the wing. In other examples, the spoiler 102 may also be moved to one or more intermediate configurations in which it is not fully deployed. During flight, air flowing over the wing generates a deploying force on the spoiler 102 that urges it toward the deployed configuration. At typical aircraft cruising speeds (e.g. approximately 250 m/s), this deploying force may be considerable, e.g. between 10000 N and 40000 N (e.g. approximately 20000 N).

Figure 2 shows an aircraft control surface system 101 of the aircraft 100. The aircraft control surface system 101 comprises a gust detector 104, a controller 106 and an actuator device 200 for actuating the spoiler 102.

If the gust detector 104 detects a gust of wind as the aircraft is moving (e.g. during flight), the controller 106 may trigger the actuator device 200 to deploy the spoiler 102, e.g. to mitigate a sudden increase in load on the aircraft wing. It is desirable to be able to deploy and retract the spoiler 102 relatively quickly, as wind gusts can arise and subside quite suddenly. For instance, it may be desired to deploy the spoiler 102 in less than 150 ms, and retract the spoiler within 300 ms.

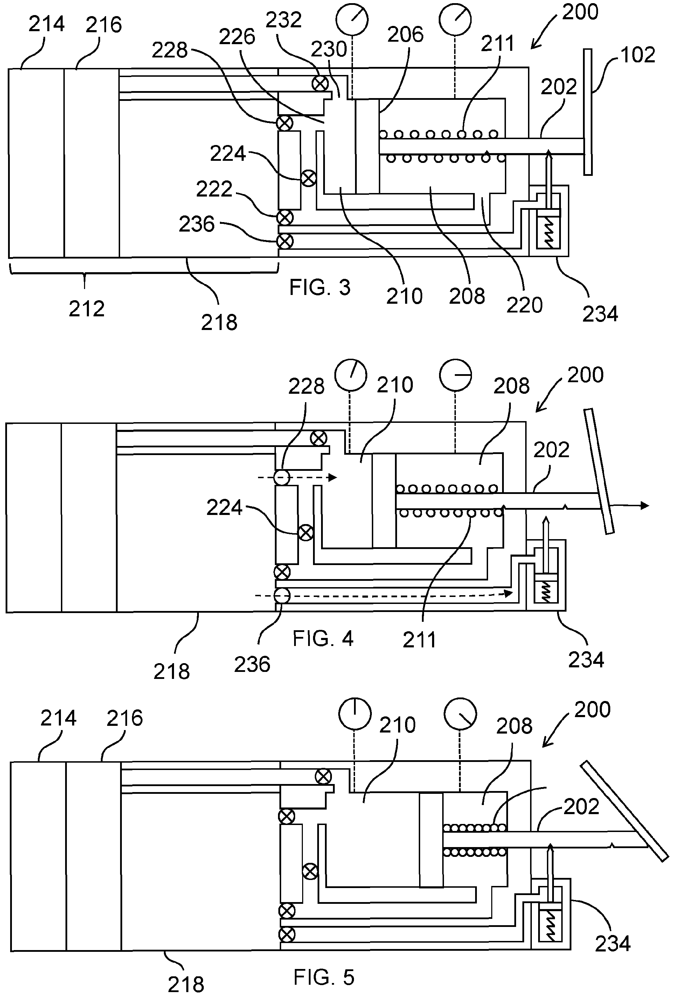

Figures 3-8 show the actuator device 200 in more detail. The actuator device 200 described herein may also be suitable for actuating other aircraft control surfaces (e.g. flaps, ailerons).

The actuator device 200 comprises an actuator arm 202, a barrel 204 and a piston 206 that is coupled to the actuator arm 202 and can move within the barrel 204. The actuator arm 202 is coupled to the spoiler 102. The barrel 204 may comprise a cylinder. The cylinder may have an inner diameter of between 30 mm and 120 mm (e.g. 60 mm). The actuator device 200 may have an overall outer diameter of between 40 mm and 160 mm (e.g. 80 mm or less).

In this example the actuator device 200 is a linear actuator device, because the actuator arm 202 moves in a straight line.

The piston 206 divides the barrel 204 into a forward chamber 208 and a rear chamber 210. The piston 206 can move between a first position in the barrel 204 that corresponds to the spoiler 102 being in a retracted configuration (shown in Figure 3), and a second position that corresponds to the spoiler 102 being in a deployed configuration (shown in Figure 5). In one example the travel between the first and second positions is between 50 mm and 300 mm, e.g. approximately 140 mm.

The actuator device 200 comprises a spring 211 that is located within the barrel 204 and provides a spring force which biases the piston 206 towards the first position.

The actuator device 200 also comprises a pumping apparatus 212 comprising a motor 214, a pump 216 and an accumulation tank 218. The motor 214 drives the pump 216 to pump a fluid (e.g. air or oil) into the accumulation tank 218 (i.e. to a raise the fluid pressure inside the accumulation tank 218). The motor 214 may have a power of between 400 W and 1600 W (e.g. 800 W). The accumulation tank 218 may have a capacity of approximately double that of the stroke volume of the piston 206. The motor 214 and pump 216 operate to maintain a desired fluid pressure within the accumulator tank 218 (e.g. 100 bar or more). Using an accumulator tank 218 allows a smaller motor 214 and pump 216 to be used whilst still providing sufficient peak fluid flow for the retraction operation described below. The overall length of the actuation device 200 (in the direction of actuation) may be between 500 mm and 1500 mm, e.g. approximately 700 mm.

The barrel 204 has a first fluid port 220 that connects the forward chamber 208 to the accumulation tank 218 via a first valve 222 and to the rear chamber 210 via a second valve 224. The barrel 204 has a second fluid port 226 that connects the rear chamber 210 to the accumulation tank 218 via a third valve 228 and to the forward chamber 208 via the second valve 224. The barrel 204 has a third fluid port 230 that connects the rear chamber 210 to an inlet of the pump 216 via a fourth valve 232.

The actuator device 200 also comprises a cleat 234 that is operable to engage with detents in the actuator arm 202 to hold the spoiler 102 in the retracted configuration and/or the deployed configuration. In other examples where the spoiler 102 can be moved to one or more intermediate configurations, the actuator arm 202 may comprise one or more intermediate detents with which the cleat 234 can engage to hold the spoiler in the intermediate configurations. The cleat 234 comprises a spring that biases the cleat 234 toward a locked configuration in which the actuator arm 202 is held. The cleat 234 can be actuated into a released position in which the actuator arm 202 is free to move by fluid pressure from the accumulator tank 218 via a fifth valve 236. In other examples, the cleat 234 may be biased towards the released position. The actuator device 200 is operable to perform a deployment operation and a retraction operation, e.g. to cause the spoiler 102 to deploy and retract respectively.

The deployment operation will now be described with reference to Figures 2-4.

Figure 3 shows the actuator device 200 with the spoiler 102 held in the retracted configuration by the cleat 234 and the piston 206 in the corresponding first position. The forward and rear chambers 208, 210 have the same fluid pressure, i.e. the fluid pressure difference between the forward and rear chambers 208, 210 is zero (illustrated by the schematic dial indicators in Figure 3 having the same reading). All of the valves 222, 224, 228, 236, 232 are closed.

As mentioned above, the deploying force of air flowing over the wing pulls the spoiler 102 towards the deployed configuration. However, the cleat 234 holds the actuator arm 202 in place and thus holds the spoiler 102 in the retracted configuration.

Immediately after the situation depicted in Figure 3, the gust detector 104 detects a gust of wind and the controller 106 triggers the actuator 200 to deploy the spoiler 102. Valve 236 is opened and the cleat 234 is released by fluid pressure from the accumulator tank 218. The piston 206 begins to move forwards, as illustrated in Figure 4, due to the deploying force on the spoiler 102.

As the piston 206 (and the actuator arm 202) moves forwards, the volume of the forward chamber 208 decreases and the fluid pressure inside the forward chamber 208 increases. Conversely, the volume of the rear chamber 210 increases and the fluid pressure inside the rear chamber 210 decreases. The fluid pressure difference between the forward and rear chambers 208, 210 thus increases. This opposes the motion of the piston 206.

The spring 211 is also compressed as the piston 206 moves forwards, and so the spring force that also opposes the forward motion of the actuator arm 202, will also increase.

Figures 3 and 4 shows the valve 224 joining the forward and rear chambers 208, 210 as being closed throughout the deployment operation. However, it may be possible in some cases to have the valve 224 open during an initial stage of deployment (e.g. to reduce initial resistance and speed up deployment). In such cases the valve 224 may only close after a predetermined time and/or once the piston 206 has travelled a predetermined distance towards the second position.

If the combined force from the increasing fluid pressure difference and the spring 211 would exceed the deploying force before the spoiler 102 reaches the deployed configuration, valve 228 may be opened during the deployment operation to cause fluid to flow into the rear chamber 210 via the fluid port 226 to reduce the fluid pressure difference. However, this may not always be essential, i.e. if the deploying force is sufficiently large. If the pressure in the rear chamber 210 is raised during deployment in this way, valve 232 may be opened at the end of deployment to lower this pressure prior to retraction.

Figure 5 shows the actuator device 200 at the end of the deployment operation. The piston 206 has reached the second position, the spoiler 102 has reached the deployed configuration and the cleat 234 is in the locked configuration to hold it there. All of the valves 222, 224, 228, 236, 232 are closed. The fluid pressure difference between the forward and rear chambers 208, 210 has further increased.

The increasing opposing forces from the fluid pressure difference and the spring 211 damp the motion of the piston 206 to mitigate a sudden shock as the spoiler 102 reaches the deployed configuration. The pressure difference and the compressed spring 211 also represent stores of energy, i.e. energy that has been harvested from the movement of the spoiler 102 under the deploying force. The dimensions and operation of the barrel 204, piston 206, spring 211 and various valves are tuned to ensure that the spoiler 102 is still deployed within the desired time (e.g. within 150 ms) whilst providing damping and storing energy.

The actuator device 200 may be held with the spoiler 102 in the deployed configuration for as long as is required, e.g. for the duration of the gust. During this time, the motor and pump 214, 216 may operate to pump fluid into the accumulator tank 218 (e.g. to replace fluid lost during the deployment operation).

The retraction operation will now be described with reference to Figures 5-7.

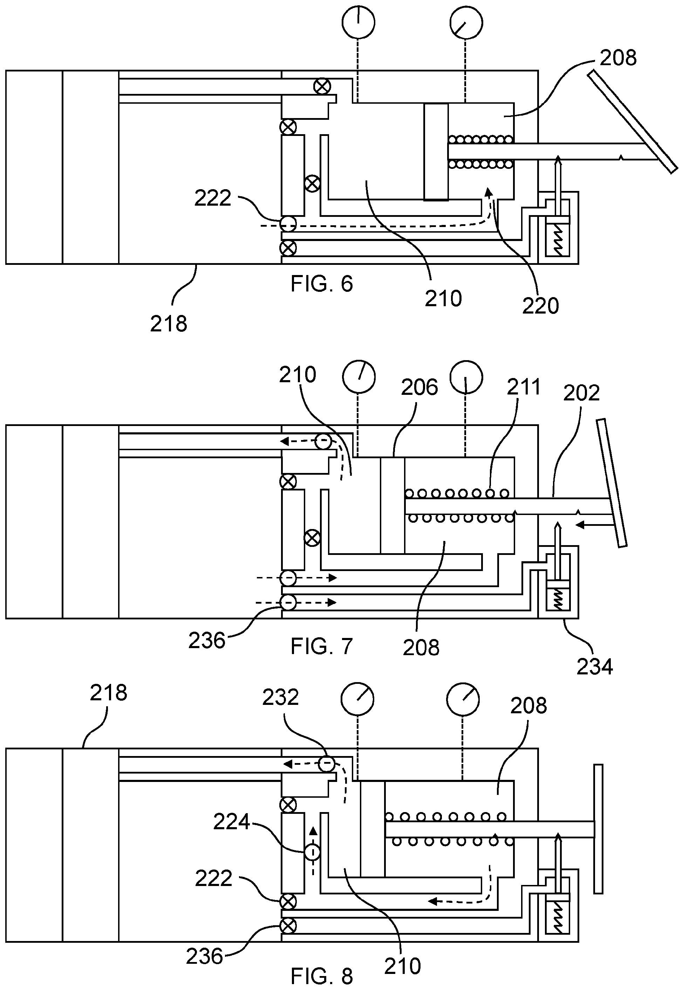

Figure 6 shows the beginning of the retraction operation. The valve 222 opens and fluid flows from the accumulator tank 218 into the forward chamber 220. This further increases the fluid pressure difference between the forward and rear chambers 208, 210.

The cleat 234 is then released by opening valve 236 (shown in Figure 7). The combined force of the spring 211 and the increased fluid pressure difference causes the piston 206 to move from the second position back towards the first position, i.e. causing the spoiler 102 to begin to retract. The amount of additional fluid pressure that the accumulator tank 218 needs to provide to the forward chamber 208 to retract the spoiler 102 is reduced compared to traditional hydraulic or pneumatic actuator devices because of the energy saved during the deployment operation.

As the piston 206 moves back towards the first position, the forward chamber 208 will increase in volume and the rear chamber 210 will decrease in volume. This reduces the fluid pressure difference and thus reduces the retracting pressure force on the piston 206. Moreover, as the spring 211 becomes uncompressed, the retracting spring force on the piston 206 also reduces. The reduction in these forces as the piston 206 damps the retraction motion, again mitigating sudden shocks when the spoiler 102 reaches the retracted configuration.

Once the piston 206 reaches the first position, the cleat 234 is actuated to hold the spoiler 102 in the retracted configuration. Valves 222 and 236 are closed and valve 224 is opened. This causes fluid to flow from the forward chamber 208 to the lower pressure rear chamber 210, i.e. to equalise the pressures to bring the fluid pressure difference back to zero. Valve 232 may also be opened to vent fluid to the input of the pump 216, e.g. to further lower the pressures in the forward and rear chambers 208, 210. The valves are all then closed to return the actuator device 200 to the ready-to-deploy configuration shown in Figure 3. The motor 214 and pump 216 operate to increase the fluid pressure within the accumulator tank 218 back to the initial level.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of the disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. An aircraft control surface system comprising:
a control surface having a retracted configuration and a deployed configuration and arranged to be provided on an aircraft so as to be subject to a deploying force urging it towards the deployed configuration when the aircraft is in motion; and
an actuator device for controlling movement of the control surface between the retracted configuration and the deployed configuration, the actuator device comprising:
an actuator arm coupled to the control surface;
a barrel comprising a fluid port;
a piston coupled to the actuator arm, wherein the piston divides the barrel into a forward chamber and a rear chamber and the piston is arranged to move within the barrel between a first position corresponding to the retracted configuration of the control surface and a second position corresponding to the deployed configuration of the control surface; and
a pumping apparatus arranged to cause fluid to flow into the forward chamber of the barrel via the fluid port to increase a fluid pressure difference between the forward chamber and the rear chamber;
wherein the actuator device is operable to perform:
a deployment operation in which the deploying force causes the control surface to move from the retracted configuration to the deployed configuration and the piston to move from the first position to the second position so as to cause an increase in the fluid pressure difference between the forward and rear chambers of the barrel; and
a retraction operation in which the pumping apparatus causes fluid to flow into the forward chamber of the barrel to further increase the fluid pressure difference between the forward chamber and the rear chamber and drive the piston from the second position to the first position, so that the control surface moves from the deployed configuration to the retracted configuration.

2. The aircraft control surface system of claim 1, wherein the pumping apparatus comprises a pump and an accumulation tank in fluid communication with the fluid port, wherein the pump is arranged to pump fluid into the accumulation tank.

3. The aircraft control surface system of claim 1 or 2, wherein the barrel comprises a second fluid port, and the pumping apparatus is operable to cause fluid to flow into the rear chamber via the second fluid port during the deployment operation.

4. The aircraft control surface system of claim 3, wherein the barrel comprises a third fluid port operable to vent fluid from the rear chamber of the barrel and the actuation device is arranged to vent fluid from the rear chamber via the third fluid port at the end of the deployment operation.

5. The aircraft control surface system of any preceding claim, wherein the actuator device comprises a valve operable to connect the forward and rear chambers of the barrel, wherein said valve is opened during a first part of the deployment operation.

6. The aircraft control surface system of any preceding claim, comprising a gust detector arranged to detect gusts over the control surface and a controller arranged to trigger the actuator device to perform the deployment operation in response to a gust being detected.

7. The aircraft control surface system of any preceding claim, comprising a resilient member arranged to bias the piston towards the first position.

8. The aircraft control surface system of any preceding claim, comprising a cleat arranged to hold the control surface in the retracted configuration and/or the deployed configuration and optionally in an intermediate configuration.

9. The aircraft control surface system of claim 8, wherein the cleat comprises a resilient member arranged to bias the piston towards a locked configuration or a released configuration.

10. The aircraft control surface system of claim 8 or 9, wherein the cleat is be arranged to be actuated by fluid pressure provided from the pumping apparatus.

11. The aircraft control surface system of any preceding claim, wherein the control surface comprises a wing control surface.

12. The aircraft control surface system of any preceding claim, wherein the deploying force is at least 10000N when the aircraft is travelling at flight speeds.

13. The aircraft control surface system of any preceding claim, wherein the actuator device is arranged to perform the deployment operation in less than 300 ms and to perform the retraction operation in less than 600 ms.

14. An aircraft comprising the aircraft control surface system as claimed in any preceding claim.

15. A method of actuating a control surface having a retracted configuration and a deployed configuration and provided on an aircraft so as to be subject to a deploying force urging it towards the deployed configuration when the aircraft is in motion, the method comprising:
deploying the control surface by allowing the deploying force to cause the control surface to move from the retracted configuration to the deployed configuration, wherein this movement causes a piston of an actuator device coupled to the control surface via an actuator arm to move from a first position within a barrel to a second position within a barrel so as to cause an increase in a fluid pressure difference between a forward chamber of the barrel and a rear chamber of the barrel; and
retracting the control surface by a pumping apparatus of the actuator device causing fluid to flow into the forward chamber of the barrel via a fluid port to further increase the fluid pressure difference between the forward chamber and the rear chamber and drive the piston from the second position to the first position, so that the control surface moves from the deployed configuration to the retracted configuration.
